# EUROPÄISCHE PATENTSCHRIFT

(11) **EP 2 118 507 B1**
(45) Veröffentlichungstag und Bekanntmachung des Hinweises auf die Patenterteilung: **29.12.2010**
(21) Anmeldenummer: 08707427.4
(22) Anmeldetag: 31.01.2008
(51) Int. Cl.: F16D 21/06, F16D 25/10

(54) **KUPPLUNGSEINRICHTUNG MIT BEFESTIGUNGSMITTEL ZUR FIXIERUNG DER AUSGANGSNABE**
CLUTCH DEVICE WITH FASTENING MEANS FOR FIXING THE OUTPUT HUB
DISPOSITIF D'EMBRAYAGE PRESENTANT UN MOYEN DE FIXATION DESTINE A LA FIXATION DU MOYEU DE SORTIE

(30) Priorität: 08.02.2007 DE 102007007011; 26.05.2007 DE 102007024788
(43) Veröffentlichungstag der Anmeldung: 18.11.2009
(73) Patentinhaber: BorgWarner, Inc., Auburn Hills, MI 48326-2872 (US)
(72) Erfinder: HAUCK, Hans Jürgen, 74523 Schwäbisch Hall (DE)
(74) Vertreter: Leckel, Ulf
(86) Internationale Anmeldenummer: PCT/EP2008/000736
(87) Internationale Veröffentlichungsnummer: WO 2008/095637

(56) Entgegenhaltungen:
- EP-A- 1 226 992
- EP-A- 1 528 276
- EP-A- 1 632 687
- DE-A1-102005 045 158

## Beschreibung

### Beschreibung

Die vorliegende Erfindung betrifft eine Kupplungseinrichtung mit einer motorseitigen Eingangsnabe, die eine Mitnehmerscheibe aufweist, und einer getriebeseitigen Ausgangsnabe, wobei die motorseitige Eingangsnabe mit der getriebeseitigen Ausgangsnabe gekoppelt werden kann und ein Befestigungsmittel zur axialen Fixierung der Ausgangsnabe an einer Getriebewelle vorgesehen ist.

Eine derartige Kupplungseinrichtung ist z.B. aus EP-A-1 632 687 bekannt.

Aus dem Stand der Technik sind Kupplungseinrichtungen, insbesondere Lammellenkupplungen, bekannt, die eine mit der Motorausgangswelle verbindbare Eingangsnabe aufweisen. Die Eingangsnaben sind wiederum mit einer Mitnehmerscheibe versehen, um die Drehung auf das Kupplungseingangsgehäuse o. ä. zu übertragen. Die Eingangsnabe ist beispielsweise mit einem Außenlamellenträger verbunden, dessen Außenlamellen mit Innenlamellen koppelbar sind, wobei die Innenlamellen wiederum an einem Innenlamellenträger angeordnet sind. Der Innenlamellenträger weist wiederum eine Ausgangsnabe auf, die mit einer Getriebewelle verbunden werden kann. Die Ausgangsnabe wird dabei mit Hilfe eines Befestigungsmittels in axialer Richtung an der Getriebewelle filiert. Bei dem Befestigungsmittel handelt es sich zumeist um einen Sicherungsring.

Der zuvor beschriebene Stand der Technik hat den Nachteil, dass die Montage der Kupplungseinrichtung an dem Getriebe bzw. an der Getriebewelle erschwert ist.

Es ist daher eine Aufgabe der vorliegenden Erfindung, eine Kupplungseinrichtung mit einem Befestigungsmittel zur axialen Fixierung der Ausgangsnabe an einer Getriebewelle zu schaffen, die eine besonders einfache und somit kostengünstige Montage an einem Getriebe ermöglicht.

Diese Aufgabe wird durch die in Patentanspruch 1 angegebenen Merkmale gelöst. Vorteilhafte Ausführungsformen der Erfindung sind Gegenstand der Unteransprüche.

Die erfindungsgemäße Kupplungseinrichtung, bei der es sich beispielsweise um eine Lamellenkupplung handeln kann, weist eine motorseitige Eingangsnabe auf, die zum Beispiel mit einer Motorausgangswelle verbunden werden kann. Die Eingangsnabe weist ferner eine Mitnehmerscheibe zur Übertragung einer Drehung auf, wobei die Mitnehmerscheibe beispielsweise als Teil eines Kupplungs-oder Dämpfereingangsgehäuses ausgebildet sein kann. Die Kupplungseinrichtung weist ferner mindestens eine getriebeseitige Ausgangsnabe auf, wobei die motorseitige Eingangsnabe mit der getriebeseitigen Ausgangsnabe gekoppelt werden kann. Dies kann beispielsweise über Außen- und Innenlamellen erfolgen, wobei der Außenlamellenträger mit der Mitnehmerscheibe und der Innenlamellenträger mit der Ausgangsnabe in Wirkverbindung steht. Es ist ferner ein Befestigungsmittel zur axialen Fixierung der Ausgangsnabe an einer Getriebewelle vorgesehen. Erfindungsgemäß sind die motorseitige Eingangsnabe und/oder die Mitnehmerscheibe derart ausgebildet, dass das Befestigungsmittel auch noch nach dem Anbringen der motorseitigen Eingangsnabe an der Kupplungseinrichtung betätigt werden kann. So kann beispielsweise eine Aussparung an der Eingangsnabe und/oder der Mitnehmerscheibe vorgesehen sein, so dass der Zugriff auf das Befestigungsmittel weiterhin gegeben ist.

Beim Stand der Technik muss zunächst ein erster Teil der Kupplungseinrichtung mit dem Getriebe verbunden werden. So wird bei der Montage in einem ersten Schritt die Ausgangsnabe an der Getriebewelle axial fixiert. Erst anschließend wird der zweite Teil der Kupplungseinrichtung, nämlich die Eingangsnabe mit der Mitnehmerscheibe an dem ersten Teil der Kupplungseinrichtung befestigt. Somit kann die Kupplungseinrichtung nicht als Ganzes, also mitsamt der Eingangsnabe und der Mitnehmerscheibe, an dem Getriebe angebracht werden. Dieser Nachteil wird durch die Erfindung überwunden, bei der das Befestigungsmittel selbst bei vollständig zusammengesetzter Kupplungseinrichtung, also auch nach dem Anbringen der motorseitigen Eingangsnabe, weiterhin betätigt werden kann. So ist es möglich, dem Automobil- oder Getriebehersteller eine vollständig montierte Kupplungseinrichtung zu liefern, die dieser problemlos in das Kraftfahrzeug einbauen bzw. an das Getriebe anbauen kann.

In einer bevorzugten Ausführungsform der erfindungsgemäßen Kupplungseinrichtung weist die Eingangsnabe und/oder die Mitnehmerscheibe eine Aussparung auf, durch die das Befestigungsmittel betätigt werden kann. So kann beispielsweise ein Werkzeug durch die Aussparung in der Eingangsnabe und/oder der Mitnehmerscheibe bis zu dem Befestigungsmittel geführt werden, um dieses zu betätigen. So kann trotz vollständig zusammengebauter Kupplungseinrichtung eine nachträgliche Befestigung der Ausgangsnabe an der Getriebewelle mit Hilfe des Werkzeugs erfolgen.

In einer weiteren bevorzugten Ausführungsform der erfindungsgemäßen Kupplungseinrichtung ist die Aussparung in der Eingangsnabe vorgesehen, wobei es sich vorzugsweise um eine zentrale Aussparung handelt. Bei der Anordnung der Aussparung in der Eingangsnabe, insbesondere bei einer zentralen Anordnung, ist nur eine geringe bzw. gar keine Exzentrizität der Aussparung gegeben. Hierdurch ist die Handhabung und die Montage wesentlich vereinfacht, zumal die Eingangsnabe und die Mitnehmerscheibe unabhängig von ihrer Drehstellung an der restlichen Kupplungseinrichtung befestigt werden können, ohne dass das Befestigungsmittel schwerer oder gar nicht mehr über die Aussparung zu erreichen ist.

In einer vorteilhaften Ausführungsform der erfindungsgemäßen Kupplungseinrichtung ist die Kupplungseinrichtung dadurch vor Verunreinigungen geschützt, dass ein Verschlussteil zum Öffnen und Schließen der Aussparung an der Kupplungseinrichtung vorgesehen ist. Auch wird hierdurch das Umfeld der Kupplungseinrichtung vor Verunreinigungen, wie beispielsweise Abriebpartikeln, geschützt.

Damit die Kupplungseinrichtung auch als Nasskupplung verwendbar ist, kann die Aussparung in einer weiteren vorteilhaften Ausführungsform der erfindungsgemäßen Kupplungseinrichtung durch das Verschlussteil abdichtend verschlossen werden. Ein Austreten von Öl und auch eine Verunreinigung desselben von außen wird hierdurch sicher verhindert.

Um ein besonders sicheres Verschließen der Aussparung zu erreichen, ist das Verschlussteil in einer weiteren vorteilhaften Ausführungsform der erfindungsgemäßen Kupplungseinrichtung ein becherförmiger Pfropfen. So kann der Mantel des becherförmigen Pfropfens beispielsweise entlang einer längeren Strecke in axialer Richtung an der Wandung der Aussparung anliegen, um eine gute Dichtigkeit zu erzielen. Darüber hinaus ist ein becherförmiger Pfropfen leicht, so dass lediglich eine kleine Masse mitgedreht wird. Der Pfropfen besteht vorzugsweise aus Gummi.

In einer weiteren vorteilhaften Ausführungsform der erfindungsgemäßen Kupplungseinrichtung weist das Verschlussteil im Einbauzustand einen in axialer Richtung aus der Aussparung hervorstehenden Führungsabschnitt auf, der in einer stirnseitigen Vertiefung einer Motorausgangswelle aufgenommen, geführt und/oder abgestützt werden kann. Während die Dimensionen des Führungsabschnitts bei herkömmlichen Kupplungseinrichtungen fest durch die Eingangsnabe vorgegeben sind, kann die Größe, wie beispielsweise der Durchmesser und die Länge, des Führungsabschnitts bei dieser erfindungsgemäßen Ausführungsform durch geeignete Auswahl der Verschlussteils variiert werden, so dass eine einfache nachträgliche Anpassung der Kupplungseinrichtung an die jeweilige Motorausgangswelle möglich ist, mit der die Kupplungseinrichtung verbunden werden soll.

In einer besonders bevorzugten Ausführungsform der erfindungsgemäßen Kupplungseinrichtung kann das Befestigungsmittel stirnseitig mit der Getriebewelle verbunden werden. Hierdurch wird eine besonders gute Erreichbarkeit des Befestigungsmittels selbst bei vollständig zusammengebauter Kupplungseinrichtung sichergestellt. Bei den aus dem Stand der Technik bekannten Lösungen, die einen Sicherungsring zum Befestigen der Ausgangsnabe vorschlagen, der am Umfang der Getriebewelle angebracht wird, ist das Befestigungsmittel selbst bei geöffneter Kupplungseinrichtung wesentlich schwerer erreichbar und betätigbar.

Um die Fixierung der Ausgangsnabe an der Getriebewelle besonders einfach und schnell durchführen zu können, weist das Befestigungsmittel in einer weiteren besonders bevorzugten Ausführungsform der erfindungsgemäßen Kupplungseinrichtung einen Gewindeabschnitt auf, der mit einem getriebewellenseitigen Gewindeabschnitt verschraubt werden kann. Die Montage ist besonders einfach, wenn sich die Gewindeabschnitte jeweils in axialer Richtung erstrecken, da dann das durch die Aussparung eingeführte Werkzeug lediglich gedreht werden müsste, ohne dabei viel Platz zu benötigen.

In einer weiteren vorteilhaften Ausführungsform der erfindungsgemäßen Kupplungseinrichtung weist der befestigungsmittelseitige Gewindeabschnitt ein Außengewinde und der getriebewellenseitige Gewindeabschnitt ein Innengewinde auf.

Um über den gesamten Umfang eine besonders gleichmäßige Abstützung der Ausgangsnabe an dem Befestigungsmittel zu gewährleisten, weist das Befestigungsmittel in einer weiteren bevorzugten Ausführungsform der erfindungsgemäßen Kupplungseinrichtung einen Passabschnitt auf, der beim Verbinden mit einem getriebewellenseitigen Passabschnitt eine Presspassung zur Zentrierung des Befestigungsmittels ausbildet. Darüber hinaus trägt die Presspassung zu einer Festigung der Verbindung zwischen Befestigungsmittel und Getriebewelle bei.

In einer weiteren vorteilhaften Ausführungsform der erfindungsgemäßen Kupplungseinrichtung sind der befestigungsmittelseitige und der getriebewellenseitige Passabschnitt konisch ausgebildet.

In einer weiteren bevorzugten Ausführungsform der erfindungsgemäßen Kupplungseinrichtung sind der befestigungsmittelseitige und der getriebewellenseitige Passabschnitt zylindrisch ausgebildet, wobei vorzugsweise mindestens einer der zylindrischen Passabschnitte einen dem anderen Passabschnitt zugewandten konischen Endabschnitt aufweist. Auf diese Weise ist ein einfaches Einbringen des einen Passabschnittes in den anderen Passabschnitt möglich. Der konische Endabschnitt kann beispielsweise als umlaufende Fase ausgebildet sein.

In einer weiteren vorteilhaften Ausführungsform der erfindungsgemäßen Kupplungseinrichtung sind der befestigungsmittelseitige Passabschnitt und/oder Gewindeabschnitt an einem axial hervorstehenden Verbindungsteil des Befestigungsmittels und der getriebewellenseitige Passabschnitt und/oder Gewindeabschnitt in einer stirnseitigen Ausnehmung in der Getriebewelle vorgesehen.

Gemäß einer weiteren vorteilhaften Ausführungsform der erfindungsgemäßen Kupplungseinrichtung kann das axial hervorstehende Verbindungsteil des Befestigungsmittels in axialer Richtung in die stirnseitige Ausnehmung in der Getriebewelle eingebracht werden. Durch das Einbringen in axialer Richtung gestaltet sich das Fixieren der Ausgangsnabe an der Getriebewelle besonders einfach.

Um eine sichere Anordnung des Befestigungsmittels und somit auch der damit verbundenen Getriebewelle innerhalb des Gesamtaufbaus zu erreichen, ist das Befestigungsmittel in einer weiteren bevorzugten Ausführungsform der erfindungsgemäßen Kupplungseinrichtung in radialer Richtung an der Eingangsnabe abgestützt und umgekehrt. Zu diesem Zweck kann beispielsweise ein umlaufendes Radiallager zwischen dem Befestigungsmittel und der Eingangsnabe angeordnet sein.

In einer weiteren bevorzugten Ausführungsform der erfindungsgemäßen Kupplungseinrichtung weist das Befestigungsmittel einen der Aussparung zugewandten Betätigungsabschnitt für ein Werkzeug auf. Ein solcher Betätigungsabschnitt kann beispielsweise als Mehrkant ausgebildet sein, so dass ein Schraubenschlüssel oder eine Nuss zum Drehen des Befestigungsmittels verwendet werden kann.

In einer besonders bevorzugten Ausführungsform der erfindungsgemäßen Kupplungseinrichtung weist der Betätigungsabschnitt einen stirnseitigen Eingriff für ein Werkzeug auf, in den ein Werkzeug formschlüssig einbringbar ist. So könnte der stirnseitige Eingriff, der ohnehin besonders gut erreichbar ist, beispielsweise einen mehreckigen Querschnitt aufweisen, so dass entsprechende Werkzeuge, wie beispielsweise ein Imbus, formschlüssig eingeführt werden können.

In einer weiteren vorteilhaften Ausführungsform der erfindungsgemäßen Kupplungseinrichtung weist das Befestigungsmittel einen radial hervorstehenden umlaufenden Kragen auf, an dem die Ausgangsnabe in axialer Richtung abgestützt werden kann. Ein umlaufender Kragen gewährleistet eine besonders gleichmäßige Abstützung entlang des gesamten Umfangs.

In einer weiteren besonders bevorzugten Ausführungsform der erfindungsgemäßen Kupplungseinrichtung ist ein austauschbarer Abstandshalter an dem umlaufenden Kragen angeordnet, so dass die Getriebewelle unter Zwischenlage des Abstandshalters in axialer Richtung an dem umlaufenden Kragen abgestützt werden kann. Auf diese Weise kann das axiale Spiel der Ausgangsnabe gegenüber der Getriebewelle durch entsprechende Auswahl des Abstandshalters an den jeweiligen Anwendungsfall angepasst werden.

Um eine gleichmäßige Abstützung der Welle an dem umlaufenden Kragen zu erreichen, ist der Abstandshalter in einer weiteren vorteilhaften Ausführungsform der erfindungsgemäßen Kupplungseinrichtung ringförmig ausgebildet.

Um das Axialspiel der Ausgangsnabe gegenüber der Getriebewelle besonders einfach einstellen bzw. anpassen zu können, ist in einer weiteren besonders bevorzugten Ausführungsform der erfindungsgemäßen Kupplungseinrichtung ein Aufnahmeraum in der Kupplungseinrichtung vorgesehen, in dem die Getriebewelle aufnehmbar ist, wobei der Abstandshalter durch den Aufnahmeraum hindurchgeführt und an dem Befestigungsmittel angebracht werden kann. So muss der Abstandshalter entsprechend klein ausgeführt sein, um durch den Aufnahmeraum eingebracht werden zu können.

In einer weiteren besonders bevorzugten Ausführungsform der erfindungsgemäßen Kupplungseinrichtung ist der Außendurchmesser des ringförmigen Abstandshalters kleiner als der Innendurchmesser der Ausgangsnabe, so dass der ringförmige Abstandshalter ohne Probleme durch die Ausgangsnabe bis zu dem Befestigungsmittel geführt werden kann.

In einer weiteren besonders bevorzugten Ausführungsform der erfindungsgemäßen Kupplungseinrichtung kann der Abstandshalter stirnseitig an der Getriebewelle befestigt werden. So kann an der Stirnseite beispielsweise eine entsprechende Aufnahme zum Einlegen oder Aufschieben des Abstandshalters vorgesehen sein. Auf diese Weise kann der Abstandshalter gemeinsam mit der Getriebewelle durch den Aufnahmeraum geführt werden, wodurch die Montage wesentlich vereinfacht ist.

Gemäß einer weiteren bevorzugten Ausführungsform der erfindungsgemäßen Kupplungseinrichtung weist die Getriebewelle eine stirnseitige Aufnahme auf, die als umlaufende Vertiefung am Umfang der Getriebewelle ausgebildet ist und in die der Abstandshalter eingesetzt werden kann. Hierdurch ist ein besonders einfaches Einsetzen des Abstandshalters in die Aufnahme möglich, so dass die Montage vereinfacht ist.

Um den vorgenannten Vorteil zu verstärken, ist die umlaufende Vertiefung in einer weiteren besonders bevorzugten Ausführungsform der erfindungsgemäßen Kupplungseinrichtung in radialer Richtung nach außen und in axialer Richtung geöffnet.

Die Erfindung wird im Folgenden anhand einer beispielhaften Ausführungsform unter Bezugnahme auf die beigefügten Zeichnungen näher erläutert. Es zeigen:
- Fig. 1: eine Seitenansicht einer Ausführungs- form der erfindungsgemäßen Kupplungs- einrichtung in geschnittener Darstel- lung,
- Fig. 2: eine vergrößerte Darstellung des Be- festigungsmittels von Fig. 1 sowie des umliegenden Bereichs,
- Fig. 3: eine vergrößerte Darstellung des Aus- schnitts A von Fig. 2 in einer abge- wandelten Ausführungsform der Kupp- lungseinrichtung und
- Fig. 4: eine teilweise Seitenansicht eines Verschlussteils für die Aussparung gemäß einer alternativen Ausführungs- form in geschnittener Darstellung.

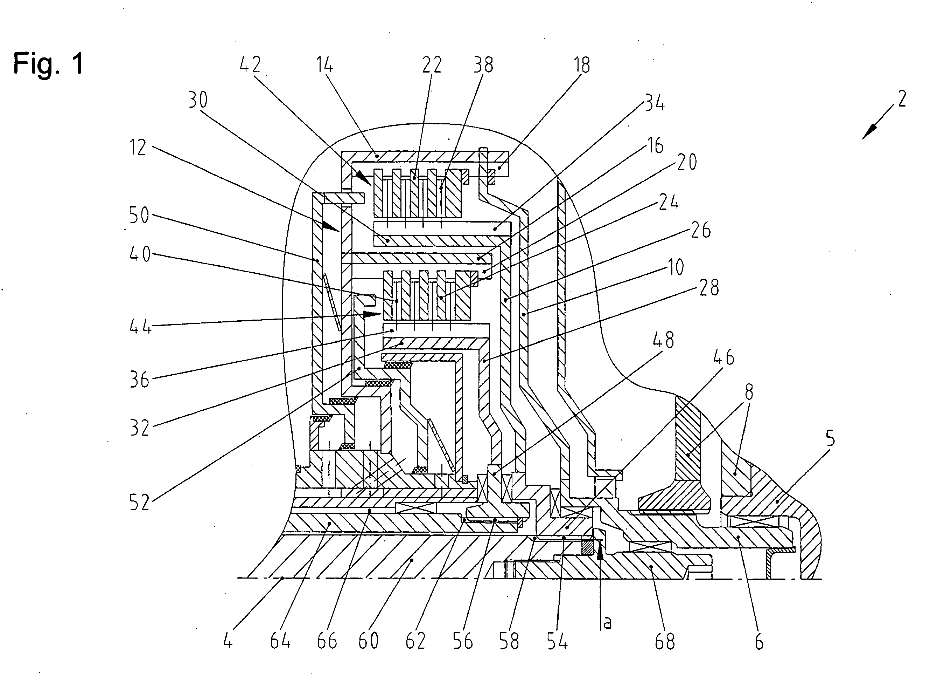

Fig. 1 zeigt eine Ausführungsform der erfindungsgemäßen Kupplungseinrichtung 2 im Querschnitt, wobei bezogen auf die Längs- bzw. Drehachse 4, um die sich die rotierbaren Teile der Kupplungseinrichtung 2 drehen, lediglich der obere Teil dargestellt ist.

Die Kupplungseinrichtung 2 weist eine motorseitige Eingangsnabe 6 auf. Die Eingangsnabe 6 ist über einen Torsionsschwingungsdämpfer 8, von dem in Fig. 1 lediglich ein Teil angedeutet ist, mit einer Motorausgangswelle 5 verbunden, so dass eine Drehung von der Motorausgangswelle 5 auf die Eingangsnabe 6 übertragbar ist. Dabei werden etwaige Drehstöße von dem Torsionsschwingungsdämpfer 8 abgefangen. Die Eingangsnabe 6 ist an ihrem dem Torsionsschwingungsdämpfer 8 abgewandten Ende drehfest mit einer Mitnehmerscheibe 10 verbunden.

Die Mitnehmerscheibe 10 ist drehfest mit einem Außenlamellenträger 12 verbunden. Der Außenlamellenträger 12 weist dabei einen äußeren Tragabschnitt 14 und einen inneren Tragabschnitt 16 auf. Die Tragabschnitte 14, 16 sind jeweils mit einer Innenverzahnung 18, 20 versehen. In die Innenverzahnungen 18, 20 greifen die Zähne einer Vielzahl von längsverschiebbaren Außenlamellen 22, 24 ein, die somit drehfest mit dem Außenlamellenträger 12 verbunden sind.

Die als Lamellenkupplung ausgebildete Kupplungseinrichtung 2 weist ferner einen äußeren und einen inneren Innenlamellenträger 26 bzw. 28 auf. Beide Innenlamellenträger 26, 28 weisen an ihrem radial nach außen weisenden Ende einen Tragabschnitt 30, 32 mit einer Außenverzahnung 34, 36 auf. Es sind eine Vielzahl von längsverschiebbaren Innenlamellen 38, 40 vorgesehen, die mit den Außenverzahnungen 34, 36 in Eingriff sind, so dass die Innenlamellen 38, 40 drehfest mit den Innenlamellenträgern 26, 28 verbunden sind. In axialer Richtung sind die Außen- und Innenlamellen 22, 24 und 38, 40 abwechselnd hintereinander angeordnet und bilden so ein äußeres Lamellenpaket 42 und ein inneres Lamellenpaket 44 aus.

Der äußere Innenlamellenträger 26 ist an seinem radial nach innen weisenden Ende drehfest mit einer ersten Ausgangsnabe 46 verbunden, während der innere Innenlamellenträger 28 an seinem radial nach innen weisenden Ende drehfest mit einer zweiten Ausgangsnabe 48 verbunden ist. Die Kupplungseinrichtung weist ferner einen hydraulisch betätigbaren und axial verschiebbaren äußeren und inneren Betätigungskolben 50 bzw. 52 auf. Mit Hilfe des äußeren Betätigungskolbens 50 kann das äußere Lamellenpaket 42 zusammengedrückt werden, so dass die Eingangsnabe 6 mittelbar mit der ersten Ausgangsnabe 46 gekoppelt werden kann. Mit Hilfe des inneren Betätigungskolbens 52 kann wiederum das innere Lamellenpaket 44 zusammengedrückt werden, so dass die Eingangsnabe 6 mittelbar mit der zweiten Ausgangsnabe 48 gekoppelt werden kann.

Die Ausgangsnaben 46, 48 weisen jeweils einen zentralen Durchgang auf, der mit einer Innenverzahnung 54, 56 versehen ist. Im Einbauzustand greift die Innenverzahnung 54 der ersten Ausgangsnabe 46 in die Außenverzahnung 58 einer ersten Getriebewelle 60, die als Vollwelle ausgebildet ist, während die Innenverzahnung 56 der zweiten Ausgangsnabe 48 in die Außenverzahnung 62 einer zweiten Getriebewelle 64 eingreift, die als Hohlwelle ausgebildet ist und die erste Getriebewelle 60 umgibt. Im Einbauzustand sind die Getriebewellen 60, 64 in einem lang gestreckten Aufnahmeraum 66 der Kupplungseinrichtung 2 aufgenommen, in den die Getriebewellen 60, 64 von der der Eingangsnabe 6 abgewandten Seite entlang der Längs- bzw. Drehachse 4 eingeschoben werden können. Der kleinste Durchmesser des Aufnahmeraumes 66 in Längsrichtung ist durch den Innendurchmesser a der ersten Ausgangsnabe 46 vorgegeben.

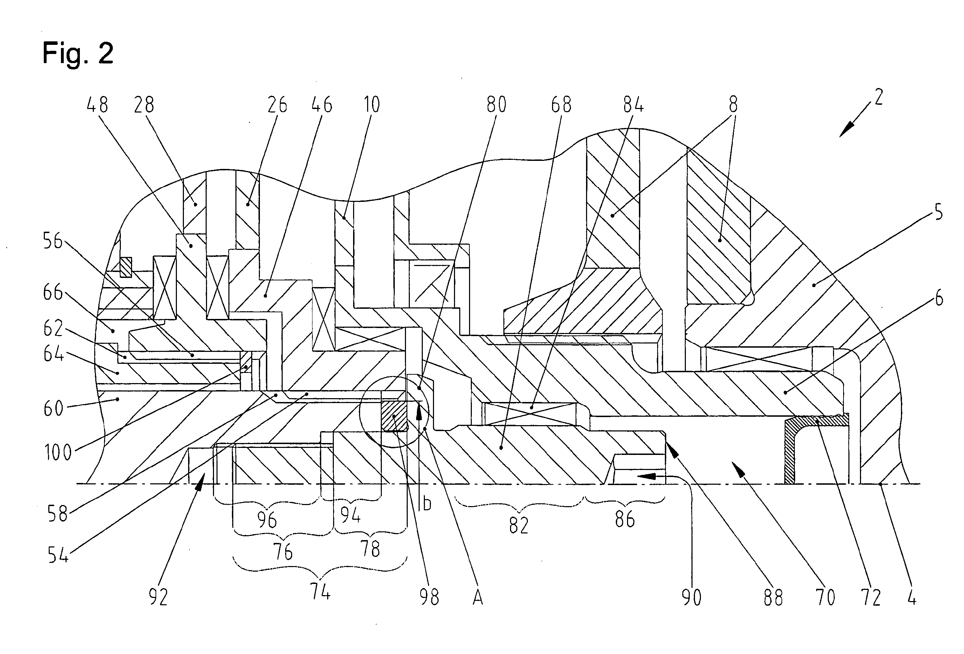

Zur axialen Fixierung der ersten Ausgangsnabe 46 an der ersten Getriebewelle 60 ist ein Befestigungsmittel 68 vorgesehen, das nachstehend unter Bezugnahme auf Fig. 2 zusammen mit weiteren Merkmalen der Kupplungseinrichtung 2 beschrieben wird.

Die motorseitige Eingangsnabe 6 ist derart ausgebildet, dass das Befestigungsmittel 68 auch noch nach dem Anbringen der motorseitigen Eingangsnabe 6 an dem Rest der Kupplungseinrichtung 2 betätigt werden kann. Zu diesem Zweck weist die Eingangsnabe 6 eine durchgehende zentrale Aussparung 70 auf, die sich entlang der Längsachse 4 erstreckt. Durch diese Aussparung 70 kann ein Werkzeug geführt werden, um das Befestigungsmittel 68 zu betätigen.

Die Kupplungseinrichtung 2 weist ferner ein Verschlussteil 72 zum Verschließen und Öffnen der Aussparung 70 auf, wobei das Verschlussteil 72 die Seite der Aussparung 70 verschließt, die der Kupplungseinrichtung 2 abgewandt und der Motorseite zugewandt ist. Das Verschlussteil 72 ist in der vorliegenden Ausführungsform als becherförmiger Pfropfen ausgebildet, der im Wesentlichen aus Gummi besteht und die Aussparung 70 abdichtend verschließt.

Das Befestigungsmittel 68 weist ein axial hervorstehendes Verbindungsteil 74 auf, das sich zu der ersten Getriebewelle 60 erstreckt. Das hervorstehende Verbindungsteil 74 umfasst dabei einen befestigungsmittelseitigen Gewindeabschnitt 76 und einen daran anschließenden befestigungsmittelseitigen Passabschnitt 78 mit größerem Durchmesser. An den Passabschnitt 78 schließt sich ein Abschnitt an, in dem ein radial hervorstehender umlaufender Kragen 80 vorgesehen ist. An den Kragen 80 schließt sich in axialer Richtung ein Stützabschnitt 82 an. Der Stützabschnitt 82 des Befestigungsmittels 68 ist in radialer Richtung über ein Radiallager 84 an der Innenseite der Eingangsnabe 6 abgestützt. Gleichsam stützt sich die Eingangsnabe 6 über das Radiallager 84 an dem Befestigungsmittel 68 ab. Das Befestigungsmittel 68 erstreckt sich demzufolge in die Eingangsnabe 6, die in der Art eines Topfes ausgebildet ist, wobei das Verschlussteil 72 den Boden des Topfes bildet.

Weiter in axialer Richtung schließt sich ein Betätigungsabschnitt 86 für ein Werkzeug an den Stützabschnitt 82 an, wobei der Betätigungsabschnitt 86 der Aussparung 70 zugewandt bzw. in dieser angeordnet ist. In der Stirnseite 88 des Befestigungsabschnitts 86, die er Aussparung 70 zugewandt ist, ist ein Eingriff 90 vorgesehen, der als Sechskanteingriff ausgebildet ist. In den Eingriff 90 kann ein Werkzeug, wie beispielsweise ein Imbus, durch die Aussparung 70 formschlüssig eingebracht werden, um das Befestigungsmittel anschließend um die Längsachse 4 zu drehen.

Das Befestigungsmittel 68 kann stirnseitig mit der ersten Getriebewelle 60 verbunden werden. Zu diesem Zweck ist in der Stirnseite der ersten Getriebewelle 60, die dem Befestigungsmittel 68 zugewandt ist, eine Ausnehmung 92 vorgesehen. Ausgehend von der Stirnseite weist die Ausnehmung 92 einen getriebewellenseitigen Passabschnitt 94 und einen daran anschließenden getriebewellenseitigen Gewindeabschnitt 96 auf.

Nachstehend werden weitere Merkmale der Erfindung im Rahmen der Erläuterung der Vorgehensweise bei der Montage der Kupplungseinrichtung 2 an einem Getriebe unter Bezugnahme auf die Fig. 1 und 2 beschrieben.

Zunächst wird die vollständig zusammengesetzte Kupplungseinrichtung 2 zur Verfügung gestellt. Die vollständig zusammengesetzte Kupplungseinrichtung 2 umfasst dabei alle in Fig. 1 gezeigten Bauteile mit Ausnahme des Torsionsschwingungsdämpfers 8, der Getriebewellen 60, 64 und der Motorausgangswelle 5, so dass der Aufnahmeraum 66 leer, das Verschlussteil 72 abnehmbar und das Befestigungsmittel 68 über die Aussparung 70 erreichbar ist. Um das axiale Spiel der an der ersten Getriebewelle 60 zu befestigenden ersten Ausgangsnabe 46 festzulegen, wird zunächst ein austauschbarer ringförmiger Abstandshalter 98 an dem Befestigungsmittel 68 angebracht. Der ringförmige Abstandshalter 98 wird dabei zunächst durch den Aufnahmeraum 66 bis zu dem Befestigungsmittel 68 geführt, da die Kupplungseinrichtung 2 ja bereits vollständig zusammengesetzt ist. Der Außendurchmesser b des ringförmigen Abstandshalters 98 ist dabei derart gewählt, dass dieser kleiner als der Innendurchmesser a der ersten Ausgangsnabe 46 ist, so dass der ringförmige Abstandshalter 98 tatsächlich bis zu dem Befestigungsmittel 68 geführt werden kann. An dem Befestigungsmittel 68 angelangt wird der ringförmige Abstandshalter 98 über den befestigungsmittelseitigen Passabschnitt 78 geschoben und in axialer Richtung an dem Kragen 80 abgestützt.

Anschließend wird die Kupplungseinrichtung 2 an das Getriebe angesetzt, wodurch die Getriebewellen 60, 64 entlang der Längsachse 4 in den Aufnahmeraum 66 geführt werden. Auf diese Weise wird das axial hervorstehende Verbindungsteil 74 des Befestigungsmittels 68 in axialer Richtung in die stirnseitige Ausnehmung 92 in der ersten Getriebewelle 60 eingebracht.

Um die erste Ausgangsnabe 46 nun sicher in axialer Richtung an der ersten Getriebewelle 60 zu fixieren, wird zunächst das Verschlussteil 72 abgenommen. Danach wird ein Imbus durch die Aussparung 70 in den Eingriff 90 eingeführt, um das Befestigungsmittel 68 in die Ausnehmung 92 in der ersten Getriebewelle 60 zu schrauben. Dabei wird das Außengewinde des befestigungsmittelseitigen Gewindeabschnitts 76 mit dem Innengewinde des getriebewellenseitigen Gewindeabschnitts 96 verschraubt. Durch das Verschrauben dringt der zylindrische Passabschnitt 78 des Befestigungsmittels 68 in den zylindrischen Passabschnitt 94 der ersten Getriebewelle 60 ein und bildet mit diesem vorzugsweise eine Presspassung aus, die u. a. eine Zentrierung des Befestigungsmittels 68 gegenüber der erste Getriebewelle 60 bewirkt. Um ein einfaches Einbringen des einen Passabschnittes 78 in den anderen Passabschnitt 94 zu ermöglichen, kann mindestens einer der zylindrischen Passabschnitte 78, 94 einen dem anderen Passabschnitt 94, 78 zugewandten konischen Endabschnitt aufweisen (nicht dargestellt). Das Befestigungsmittel 68 wird nun weiter in die Ausnehmung 92 geschraubt bis sich die erste Getriebewelle 60 mit ihrer Stirnseite unter Zwischenlage des ringförmigen Abstandshalters 98 an dem umlaufenden Kragen 80 abstützt.

Die erste Ausgangsnabe 46 ist nunmehr mit Spiel in axialer Richtung an der ersten Getriebewelle 60 fixiert, wobei die Bewegung der ersten Ausgangsnabe 46 in Richtung der Eingangsnabe 6 durch den umlaufenden Kragen 80 eingeschränkt ist, an dem sich die erste Ausgangsnabe 46 in axialer Richtung abstützen kann. Je dicker der ringförmige Abstandshalter 98 in axialer Richtung ausgebildet ist, umso größer ist das Axialspiel der ersten Ausgangsnabe 46. In der anderen axialen Richtung ist die Bewegung der ersten Ausgangsnabe 46 mittelbar über einen Sicherungsring 100 an der Innenverzahnung 56 der zweiten Ausgangsnabe 48 eingeschränkt. Der Sicherungsring 100 ist axial unverschieblich an der zweiten Ausgangsnabe 48 angeordnet und dient als Anschlag für die Stirnseite der zweiten Getriebewelle 64.

Nach dem Verbinden des Befestigungsmittels 68 mit der ersten Getriebewelle 60 kann die Aussparung 72 wieder mit Hilfe des Verschlussteils 72 verschlossen werden, um danach den Torsionsschwingungsdämpfer mit der Eingangsnabe 6 drehfest zu verbinden.

In einer abgewandelten Ausführungsform (nicht dargestellt) der Kupplungseinrichtung 2 sind der befestigungsmittelseitige und der getriebewellenseitige Passabschnitt 78, 94 konisch ausgebildet. Somit dienen die Passabschnitte 78, 94 nicht nur der Zentrierung und der Festigung der Verbindung. Vielmehr dienen die Passabschnitte 78, 94 auch als Anschläge zwischen der ersten Getriebewelle 60 einerseits und dem Befestigungsmittel 68 andererseits. Der ringförmige Anschlag 98 wäre dann derart auszuwählen, dass die erste Ausgangsnabe 46 unter Zwischenlage des ringförmigen Abstandshalters 98 an dem umlaufenden Kragen 80 abgestützt wird. Die erste Ausführungsform ist jedoch bevorzugt, da sich bei der alternativen Ausführungsform das Anbringen des ringförmigen Abstandshalters 98 durch den Aufnahmeraum 66 schwieriger gestaltet.

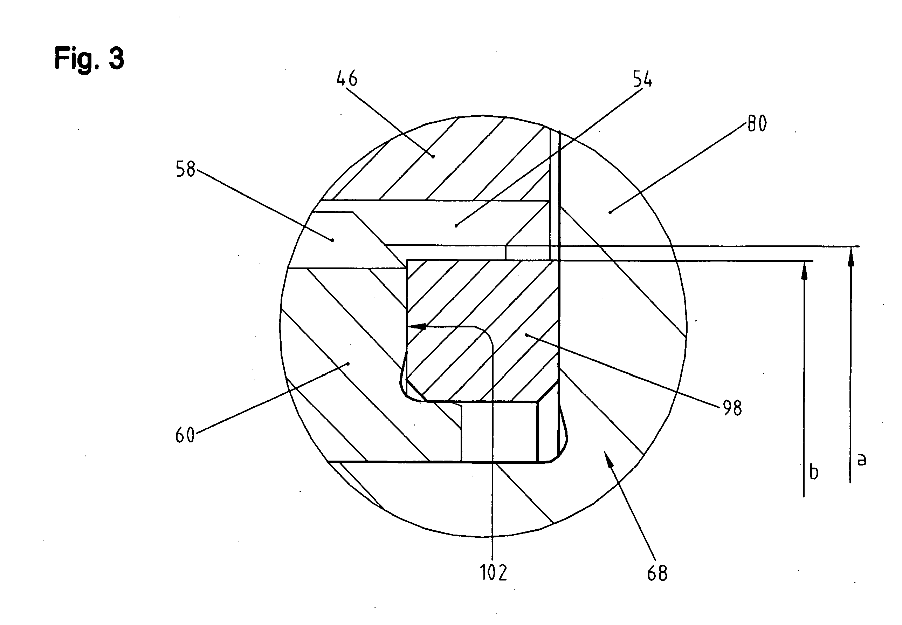

In einer weiteren abgewandelten Ausführungsform (Fig. 3) der Kupplungseinrichtung 2 ist an der Stirnseite der ersten Getriebewelle 60 eine Aufnahme 102 zum Befestigen des Abstandshalters 98 an der ersten Getriebewelle 60 vorgesehen. Die Aufnahme 102 ist hier als stirnseitige, umlaufende Vertiefung ausgebildet, in die der Abstandshalter 98 eingesetzt werden kann. Die Aufnahme 102 ist dabei derart am Umfang der Getriebewelle 60 vorgesehen, dass die Aufnahme 102 in radialer Richtung nach außen und in axialer Richtung geöffnet ist. Auf diese Weise kann der Abstandshalter 98 zunächst besonders einfach und verliersicher in die Aufnahme 102 an der Getriebewelle 60 eingesetzt und anschließend gemeinsam mit der Getriebewelle 60 durch den Aufnahmeraum 66 bis zu dem Befestigungsmittel 68 geführt werden, wodurch die Montage wesentlich vereinfacht ist.

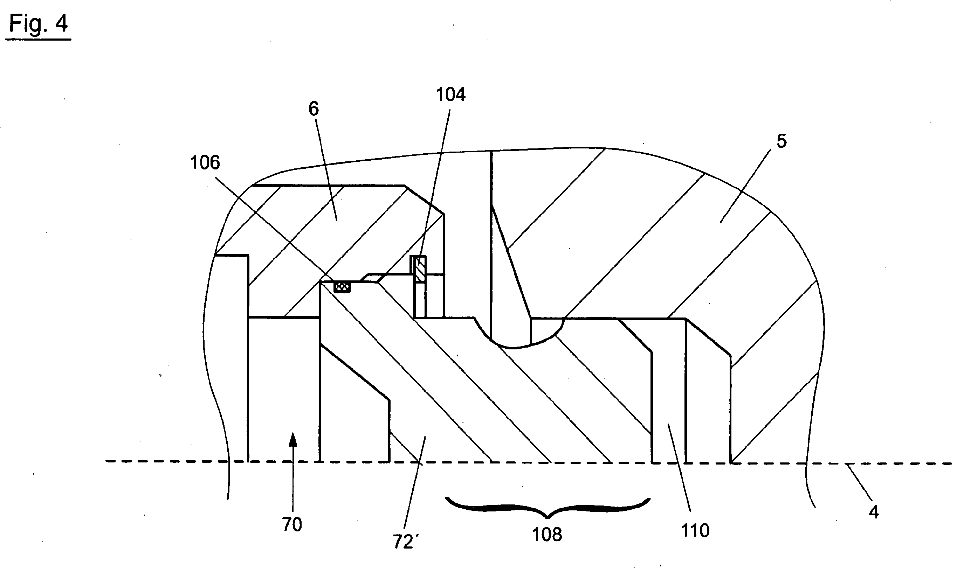

Fig. 4 zeigt eine alternative Ausführungsform des Verschlussteils 72'. Das Verschlussteil 72' ist mittels eine Sicherungsrings 104 in der Aussparung 70 der Eingangsnabe 6 in Richtung der Längsachse 4 festgelegt, wobei eine Dichtung 106 vorgesehen ist, um die Aussparung 70 abdichtend verschließen zu können. Im Einbauzustand des Verschlussteils 72' weist dieses einen Führungsabschnitt 108 auf, der in axialer Richtung aus der Aussparung 70 hervorsteht. Dieser Führungsabschnitt 108 ist nach der Montage der Kupplungseinrichtung an der Motorausgangswelle 5 in einer stirnseitigen Vertiefung 110 der Motorausgangswelle 5 aufgenommen, wie dies in Fig. 4 gezeigt ist. Auch ist der Führungsabschnitt 108 innerhalb der Vertiefung 110 an der Motorausgangswelle 5 in axialer Richtung geführt und in radialer Richtung abgestützt. Ein solches Verschlussteil 72' hat den Vorteil, dass die Länge und der Durchmesser des Führungsabschnitts 108 schnell und einfach durch den Austausch mit einem anderen Verschlussteil, dessen Führungsabschnitt andere Dimensionen aufweist, verändert werden kann. Somit ist eine besonders einfache Anpassung der Kupplungseinrichtung 2 an die jeweilige Motorausgangswelle 5 möglich, mit der die Kupplungseinrichtung 2 verbunden werden soll.

Während das Befestigungsmittel 68 bei den vorstehend beschriebenen Ausführungsformen zusammen mit der Kupplungseinrichtung 2 als Modul an die Getriebewellen 60, 64 herangeführt wird, kann es vorteilhaft sein, das Befestigungsmittel 68 erst nach dem Anbringen der Kupplungseinrichtung 2 an den Getriebewellen 60, 64 hinzuzufügen. In einem solchen Fall sollte die Aussparung 70 derart dimensioniert sein, dass das Befestigungsmittel 68 - ggf. zusammen mit dem Abstandshalter 98 - nachträglich durch die Aussparung 70 hindurchgeführt und an der Getriebewelle 60 angebracht werden kann. Bei den vorstehenden Ausführungsbeispielen müsste der umlaufende Kragen 80 dann beispielsweise einen Durchmesser haben, der kleiner als der kleinste Durchmesser der Aussparung 70 ist. Die genannte Dimensionierung der Aussparung 70 ist beispielsweise auch dann von Vorteil, wenn an Stelle des Befestigungsmittels 68 ein einfacher Sicherungsring zum Einsatz käme.

### Bezugszeichenliste

- 2: Kupplungseinrichtung
- 4: Längs-/Drehachse
- 5: Motorausgangswelle
- 6: Eingangsnabe
- 8: Torsionsschwingungsdämpfer
- 10: Mitnehmerscheibe
- 12: Außenlamellenträger
- 14: äußerer Tragabschnitt
- 16: innerer Tragabschnitt
- 18: Innenverzahnung
- 20: Innenverzahnung
- 22: Außenlamellen
- 24: Außenlamellen
- 26: äußerer Innenlamellenträger
- 28: innerer Innenlamellenträger
- 30: Tragabschnitt
- 32: Tragabschnitt
- 34: Außenverzahnung
- 36: Außenverzahnung
- 38: Innenlamellen
- 40: Innenlamellen
- 42: äußeres Lamellenpaket
- 44: inneres Lamellenpaket
- 46: erste Ausgangsnabe
- 48: zweite Ausgangsnabe
- 50: äußerer Betätigungskolben
- 52: innerer Betätigungskolben
- 54: Innenverzahnung
- 56: Innenverzahnung
- 58: Außenverzahnung
- 60: erste Getriebewelle
- 62: Außenverzahnung
- 64: zweite Getriebewelle
- 66: Aufnahmeraum
- 68: Befestigungsmittel
- 70: Aussparung
- 72: Verschlussteil
- 72': Verschlussteil
- 74: Verbindungsteil
- 76: befestigungsmittelseitiger Gewindeabschnitt
- 78: befestigungsmittelseitiger Passabschnitt
- 80: umlaufender Kragen
- 82: Stützabschnitt
- 84: Radiallager
- 86: Betätigungsabschnitt
- 88: Stirnseite
- 90: Eingriff
- 92: Ausnehmung
- 94: getriebewellenseitiger Passabschnitt
- 96: getriebewellenseitiger Gewindeabschnitt
- 98: ringförmiger Abstandshalter
- 100: Sicherungsring
- 102: Aufnahme
- 104: Sicherungsring
- 106: Dichtung
- 108: Führungsabschnitt
- 110: Vertiefung

- a: Innendurchmesser der ersten Ausgangsnabe
- b: Außendurchmesser des Abstandshalters

## Patentansprüche

1. Kupplungseinrichtung mit einer motorseitigen Eingangsnabe (6), die eine Mitnehmerscheibe (10) aufweist, und einer getriebeseitigen Ausgangsnabe (46), wobei die motorseitige Eingangsnabe (6) mit der getriebeseitigen Ausgangsnabe (46) koppelbar ist und ein Befestigungsmittel (68) zur axialen Fixierung der Ausgangsnabe (46) an einer Getriebewelle (60) vorgesehen ist, **dadurch gekennzeichnet, dass** die motorseitige Eingangsnabe (6) und/oder die Mitnehmerscheibe (10) derart ausgebildet ist, dass das Befestigungsmittel (68) auch noch nach dem Anbringen der motorseitigen Eingangsnabe (6) an der Kupplungseinrichtung (2) betätigbar ist.

2. Kupplungseinrichtung nach Anspruch 1, **dadurch gekennzeichnet, dass** die Eingangsnabe (6) und/oder die Mitnehmerscheibe (10) eine Aussparung (70) aufweist, durch die das Befestigungsmittel (68) betätigbar ist, wobei die Aussparung (70) vorzugsweise in der Eingangsnabe (6) vorgesehen und besonders bevorzugt als zentrale Aussparung (70) ausgebildet ist.

3. Kupplungseinrichtung nach Anspruch 2, **dadurch gekennzeichnet, dass** ein Verschlussteil (72) zum Öffnen und Schließen der Aussparung (70) an der Kupplungseinrichtung (2) vorgesehen ist, wobei die Aussparung (70) vorzugsweise abdichtend durch das Verschlussteil (72) verschließbar ist.

4. Kupplungseinrichtung nach Anspruch 3, **dadurch gekennzeichnet, dass** das Verschlussteil (72) ein becherförmiger Pfropfen ist, der vorzugsweise aus Gummi besteht, oder dass das Verschlussteil (72') im Einbauzustand einen in axialer Richtung aus der Aussparung (70) hervorstehenden Führungsabschnitt (108) aufweist, der in einer stirnseitigen Vertiefung (110) einer Motorausgangswelle (5) aufnehmbar, führbar und/oder abstützbar ist.

5. Kupplungseinrichtung nach einem der vorangehenden Ansprüche, **dadurch gekennzeichnet, dass** das Befestigungsmittel (68) stirnseitig mit der Getriebewelle (60) verbindbar ist.

6. Kupplungseinrichtung nach Anspruch 5, **dadurch gekennzeichnet, dass** das Befestigungsmittel (68) einen Gewindeabschnitt (76) aufweist, der mit einem getriebewellenseitigen Gewindeabschnitt (96) verschraubbar ist, wobei der befestigungsmittelseitige Gewindeabschnitt (76) vorzugsweise ein Außengewinde aufweist, während der getriebewellenseitige Gewindeabschnitt (96) ein Innengewinde aufweist.

7. Kupplungseinrichtung einem der vorangehenden Ansprüche, **dadurch gekennzeichnet, dass** das Befestigungsmittel (68) einen Passabschnitt (78) aufweist, der beim Verbinden mit einem getriebewellenseitigen Passabschnitt (94) eine Presspassung zur Zentrierung des Befestigungsmittels (68) ausbildet, wobei der befestigungsmittelseitige und der getriebewellenseitige Passabschnitt vorzugsweise konisch ausgebildet sind oder der befestigungsmittelseitige und der getriebewellenseitige Passabschnitt (78, 94) vorzugsweise zylindrisch ausgebildet sind, wobei besonders bevorzugt mindestens einer der zylindrischen Passabschnitte (78, 94) einen dem anderen Passabschnitt (94, 78) zugewandten konischen Endabschnitt aufweist.

8. Kupplungseinrichtung nach einem der Ansprüche 6 oder 7, **dadurch gekennzeichnet, dass** der befestigungsmittelseitige Passabschnitt (78) und/oder Gewindeabschnitt (76) an einem axial hervorstehenden Verbindungsteil (74) des Befestigungsmittels (68) und der getriebewellenseitige Passabschnitt (94) und/oder Gewindeabschnitt (96) in einer stirnseitigen Ausnehmung (92) in der Getriebewelle (60) vorgesehen sind, wobei das axial hervorstehende Verbindungsteil (74) des Befestigungsmittels (68) vorzugsweise in axialer Richtung in die stirnseitige Ausnehmung (92) in der Getriebewelle (60) einbringbar ist.

9. Kupplungseinrichtung nach einem der vorangehenden Ansprüche, **dadurch gekennzeichnet, dass** das Befestigungsmittel (68) in radialer Richtung an der Eingangsnabe (6) abgestützt ist und umgekehrt.

10. Kupplungseinrichtung nach einem der Ansprüche 2 bis 9, **dadurch gekennzeichnet, dass** das Befestigungsmittel (68) einen der Aussparung (70) zugewandten Betätigungsabschnitt (86) für ein Werkzeug aufweist, wobei der Betätigungsabschnitt (86) vorzugsweise einen stirnseitigen Eingriff (90) für ein Werkzeug aufweist, in den ein Werkzeug formschlüssig einbringbar ist.

11. Kupplungseinrichtung nach einem der vorangehenden Ansprüche, **dadurch gekennzeichnet, dass** das Befestigungsmittel (68) einen radial hervorstehenden umlaufenden Kragen (80) aufweist, an dem die Ausgangsnabe (46) in axialer Richtung abstützbar ist, wobei vorzugsweise ein austauschbarer Abstandshalter (98) an dem umlaufenden Kragen (80) angeordnet ist, so dass die Getriebewelle (60) unter Zwischenlage des Abstandshalters (98) in axialer Richtung an dem umlaufenden Kragen (80) abstützbar ist, und der Abstandshalter (98) besonders bevorzugt ringförmig ausgebildet ist.

12. Kupplungseinrichtung nach Anspruch 11, **dadurch gekennzeichnet, dass** ein Aufnahmeraum (66) in der Kupplungseinrichtung (2) vorgesehen ist, in dem die Getriebewelle (60) aufnehmbar ist, wobei der Abstandshalter (98) durch den Aufnahmeraum (66) hindurchführbar und an dem Befestigungsmittel (68) anbringbar ist.

13. Kupplungseinrichtung nach einem der Ansprüche 11 oder 12, **dadurch gekennzeichnet, dass** der Außendurchmesser (b) des ringförmigen Abstandshalters (98) kleiner als der Innendurchmesser (a) der Ausgangsnabe (46) ist.

14. Kupplungseinrichtung nach einem der Ansprüche 11 bis 13, **dadurch gekennzeichnet, dass** der Abstandshalter (98) stirnseitig an der Getriebewelle (60) befestigbar ist.

15. Kupplungseinrichtung nach einem der Ansprüche 11 bis 14, **dadurch gekennzeichnet, dass** die Getriebewelle (60) eine stirnseitige Aufnahme (102) aufweist, die als umlaufende Vertiefung am Umfang der Getriebewelle (60) ausgebildet und in die der Abstandshalter (98) einsetzbar ist, wobei die umlaufende Vertiefung in radialer Richtung nach außen und in axialer Richtung geöffnet ist.

## Claims

1. Clutch device having an engine-side input hub (6), which has a driver disk (10), and having a transmission-side output hub (46), with it being possible for the engine-side input hub (6) to be coupled to the transmission-side output hub (46) and with a fastening means (68) being provided for axially fixing the output hub (46) to a transmission shaft (60), **characterized in that** the engine-side input hub (6) and/or the driver disk (10) are/is designed such that the fastening means (68) can still be actuated even after the attachment of the engine-side input hub (6) to the clutch device (2).

2. Clutch device according to Claim 1, **characterized in that** the input hub (6) and/or the driver disk (10) have/has a cutout (70) through which the fastening means (68) can be actuated with the cutout (70) preferably being provided in the input hub (6) and particularly preferably being formed as a central cutout (70).

3. Clutch device according to Claim 2, **characterized in that** a closure part (72) is provided for opening and closing the cutout (70) on the clutch device (2) it being possible for the cutout (70) to be closed off in a preferably sealing fashion by means of the closure part (72).

4. Clutch device according to Claim 3, **characterized in that** the closure part (72) is a cup-shaped stopper which is preferably composed of rubber that the closure part (72'), in the installed state, has a guide section (108) which projects in the axial direction out of the cutout (70) and which can be received, guided and/or supported in an end-side depression (110) of an engine output shaft (5).

5. Clutch device according to one of the preceding claims, **characterized in that** the fastening means (68) can be connected at the end side to the transmission shaft (60).

6. Clutch device according to Claim 5, **characterized in that** the fastening means (68) has a thread section (76) which can be screwed to a transmission-shaft-side thread section (96) with the fastening-means-side thread section (76) preferably having an external thread, whereas the transmission-shaft-side thread section (96) has an internal thread.

7. Clutch device according to one of the preceding claims, **characterized in that** the fastening means (68) has a fitting section (78) which, when connected to a transmission-shaft-side fitting section (94), forms an interference fit for centering the fastening means (68) with the fastening-means-side and transmission-shaft-side fitting sections preferably being of conical design or the fastening-means-side and transmission-shaft-side fitting sections (78, 94) preferably being of cylindrical design, with particularly preferably at least one of the cylindrical fitting sections (78, 94) having a conical end section which faces toward the other fitting section (94, 78).

8. Clutch device according to one of Claims 6 or 7, **characterized in that** the fastening-means-side fitting section (78) and/or thread section (76) are/is provided on an axially projecting connecting part (74) of the fastening means (68), and the transmission-shaft-side fitting section (94) and/or thread section (96) are/is provided in an end-side recess (92) in the transmission shaft (60) it being possible for the axially projecting connecting part (74) of the fastening means (68) to preferably be inserted in the axial direction into the end-side recess (92) in the transmission shaft (60).

9. Clutch device according to one of the preceding claims, **characterized in that** the fastening means (68) is supported in the radial direction on the input hub (6) and *vice versa.*

10. Clutch device according to one of Claims 2 to 9, **characterized in that** the fastening means (68) has an actuating section (86), which faces toward the cutout (70), for a tool with the actuating section (86) preferably having an end-side engagement portion (90) for a tool, into which engagement portion (90) a tool can be inserted in a positively locking fashion.

11. Clutch device according to one of the preceding claims, **characterized in that** the fastening means (68) has a radially projecting encircling collar (80) on which the output hub (46) can be supported in the axial direction, with an exchangeable spacer (98) preferably being arranged on the encircling collar (80), such that the transmission shaft (60) can be supported in the axial direction on the encircling collar (80) with the interposition of the spacer (98), and with the spacer (98) particularly preferably being of annular design.

12. Clutch device according to Claim 11, **characterized in that** a holding space (66) is provided in the clutch device (2), in which holding space (66) the transmission shaft (60) can be held, with it being possible for the spacer (98) to be passed through the holding space (66) and attached to the fastening means (68).

13. Clutch device according to one of Claims 11 or 12, **characterized in that** the outer diameter (b) of the annular spacer (98) is less than the inner diameter (a) of the output hub (46).

14. Clutch device according to one of Claims 11 to 13, **characterized in that** the spacer (98) can be fastened at the end side to the transmission shaft (60).

15. Clutch device according to one of Claims 11 to 14, **characterized in that** the transmission shaft (60) has an end-side receptacle (102) which is designed as an encircling depression on the periphery of the transmission shaft (60) and into which the spacer (98) can be inserted, with the encircling depression being open in the radial outward direction and in the axial direction.

## Revendications

1. Dispositif d'embrayage comprenant un moyeu d'entrée du côté du moteur (6), qui présente un disque d'entraînement (10) et un moyeu de sortie du côté de la transmission (46), le moyeu d'entrée du côté du moteur (6) pouvant être accouplé au moyeu de sortie du côté de la transmission (46) et un moyen de fixation (68) étant prévu pour la fixation axiale du moyeu de sortie (46) à un arbre de transmission (60), **caractérisé en ce que** le moyeu d'entrée du côté du moteur (6) et/ou le disque d'entraînement (10) sont réalisés de telle sorte que le moyen de fixation (68) peut encore aussi être actionné après le montage du moyeu d'entrée du côté du moteur (6) au dispositif d'embrayage (2).

2. Dispositif d'embrayage selon la revendication 1, **caractérisé en ce que** le moyeu d'entrée (6) et/ou le disque d'entraînement (10) présentent un évidement (70), à travers lequel le moyen de fixation (68) peut être actionné, l'évidement (70) étant prévu de préférence dans le moyeu d'entrée (6) et étant réalisé de manière particulièrement préférée sous forme d'évidement central (70).

3. Dispositif d'embrayage selon la revendication 2, **caractérisé en ce qu'**une partie de fermeture (72) est prévue pour ouvrir et fermer l'évidement (70) au niveau du dispositif d'embrayage (2), l'évidement (70) pouvant de préférence être fermé de manière hermétique par la partie de fermeture (72).

4. Dispositif d'embrayage selon la revendication 3, **caractérisé en ce que** la partie de fermeture (72) est un bouchon en forme de coupe, qui se compose de préférence de caoutchouc ou **en ce que** la partie de fermeture (72') présente, dans l'état monté, une portion de guidage (108) saillant dans la direction axiale hors de l'évidement (70), laquelle peut être reçue, guidée et/ou supportée dans un renfoncement du côté frontal (110) d'un arbre de sortie du moteur (5).

5. Dispositif d'embrayage selon l'une quelconque des revendications précédentes, **caractérisé en ce que** le moyen de fixation (68) peut être connecté du côté frontal à l'arbre de transmission (60).

6. Dispositif d'embrayage selon la revendication 5, **caractérisé en ce que** le moyen de fixation (68) présente une portion filetée (76) qui peut être vissée à une portion filetée du côté de l'arbre de transmission (96), la portion filetée du côté du moyen de fixation (76) présentant de préférence un filetage externe, tandis que la portion filetée du côté de l'arbre de transmission (96) présente un filetage interne.

7. Dispositif d'embrayage selon l'une quelconque des revendications précédentes, **caractérisé en ce que** le moyen de fixation (68) présente une portion d'ajustement (78), qui, lors de la connexion à une portion d'ajustement du côté de l'arbre de transmission (94) constitue un ajustement serré en vue du centrage du moyen de fixation (68), les portions d'ajustement du côté du moyen de fixation et du côté de l'arbre de transmission étant de préférence réalisées de manière conique ou les portions d'ajustement du côté du moyen de fixation et du côté de l'arbre de transmission (78, 94) étant de préférence réalisées sous forme cylindrique, au moins l'une des portions d'ajustement cylindriques (78, 94) présentant de manière particulièrement préférée une portion d'extrémité conique tournée vers l'autre portion d'ajustement (94, 78).

8. Dispositif d'embrayage selon l'une quelconque des revendications 6 ou 7, **caractérisé en ce que** la portion d'ajustement du côté du moyen de fixation (78) et/ou la portion filetée (76) sont prévues sur une partie de connexion saillant axialement (74) du moyen de fixation (68) et la portion d'ajustement du côté de l'arbre de transmission (94) et/ou la portion filetée (96) sont prévues dans un logement du côté frontal (92) dans l'arbre de transmission (60), la partie de connexion saillant axialement (74) du moyen de fixation (68) pouvant de préférence être introduite dans la direction axiale dans le logement du côté frontal (92) dans l'arbre de transmission (60).

9. Dispositif d'embrayage selon l'une quelconque des revendications précédentes, **caractérisé en ce que** le moyen de fixation (68) est supporté dans la direction radiale contre le moyeu d'entrée (6) et inversement.

10. Dispositif d'embrayage selon l'une quelconque des revendications 2 à 9, **caractérisé en ce que** le moyen de fixation (68) présente une portion d'actionnement (86) pour un outil, tournée vers l'évidement (70), la portion d'actionnement (86) présentant de préférence un engagement du côté frontal (90) pour un outil, dans lequel engagement un outil peut être introduit par engagement positif.

11. Dispositif d'embrayage selon l'une quelconque des revendications précédentes, **caractérisé en ce que** le moyen de fixation (68) présente un rebord périphérique saillant radialement (80) sur lequel le moyeu de sortie (46) peut être supporté dans la direction axiale, de préférence un dispositif d'espacement remplaçable (98) étant disposé sur le rebord périphérique (80), de sorte que l'arbre de transmission (60) puisse être supporté dans la direction axiale sur le rebord périphérique (80) en interposant le dispositif d'espacement (98), et le dispositif d'espacement (98) étant, de manière particulièrement préférée, réalisé de manière annulaire.

12. Dispositif d'embrayage selon la revendication 11, **caractérisé en ce qu'**un espace de réception (66) est prévu dans le dispositif d'embrayage (2), dans lequel peut être reçu l'arbre de transmission (60), le dispositif d'espacement (98) pouvant être guidé à travers l'espace de réception (66) et pouvant être monté sur le moyen de fixation (68).

13. Dispositif d'embrayage selon l'une quelconque des revendications 11 ou 12, **caractérisé en ce que** le diamètre extérieur (b) du dispositif d'espacement de forme annulaire (98) est inférieur au diamètre intérieur (a) du moyeu de sortie (46).

14. Dispositif d'embrayage selon l'une quelconque des revendications 11 à 13, **caractérisé en ce que** le dispositif d'espacement (98) peut être fixé du côté frontal sur l'arbre de transmission (60).

15. Dispositif d'embrayage selon l'une quelconque des revendications 11 à 14, **caractérisé en ce que** l'arbre de transmission (60) présente un logement du côté frontal (102), lequel est réalisé sous forme de renfoncement périphérique sur la périphérie de l'arbre de transmission (60) et dans lequel peut être inséré le dispositif d'espacement (98), le renfoncement périphérique étant ouvert dans la direction radiale vers l'extérieur et dans la direction axiale.
